Europäisches Patentamt

European Patent Office

Office européen des brevets

(11) Publication number: **0 475 504 A2**

# EUROPEAN PATENT APPLICATION

(21) Application number: **91202230.8**

(22) Date of filing: **03.09.91**

(51) Int. Cl.5: **F16D 27/118**

(30) Priority: **11.09.90 IT 2143390**

(43) Date of publication of application:
**18.03.92 Bulletin 92/12**

(84) Designated Contracting States:
**BE CH DE DK ES FR GB GR IT LI SE**

(71) Applicant: **BARUFFALDI S.P.A.**
**Via Curiel 15**
**I-20097 San Donato Milanese Milan(IT)**

(72) Inventor: **Boffelli, Piercarlo**
**Via P. Mascagni 20**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) Electromagnetically controlled claw coupling with rotor axially movable by the armature.

(57) Electromagnetically controlled claw coupling comprising a fixed core (2, 2') carrying a winding adapted for generating a magnetic field with axial action, a rotor (9, 9') rotationally keyed to a drive shaft (10) and adapted to be coupled to a corresponding coaxial hub (11, 11'), fixed to a driven shaft (14), in which said rotor (9, 9') is axially movable and is moved in translation for coupling with said hub (11, 11') by the biasing action exerted by said magnetic field on an armature (6, 6') associated with said fixed core (2, 2') and movable only axially, said armature (6, 6') being made fixed to the rotor (9, 9') by rotational and thrust means, there being also provided elastic thrust means acting in the opposite direction to the biasing action of the magnetic field, elastic preloading means for the rotor and external devices for controlling the coupling and decoupling operations.

Fig.1

The subject of the present invention is an electromagnetically controlled claw coupling with rotor axially movable integrally with the armature.

Many types of construction are known in the art, of crown gear couplings for transmitting a rotary motion from a first drive shaft to a second shaft to be set in rotation. In particular, couplings are known in which one of the two coupling elements, known as the rotor, is mounted concentrically to a fixed electromagnetic core and has, in its axial direction, a set of teeth adapted for coupling with a corresponding set of teeth of an element, known as armature, which in addition to rotating about the same axis as the rotor can also slide axially, biased by the magnetic field of the fixed core, to engage with or disengage from the rotor, in this way transmitting - or not transmitting - the movement to a third element, known as a hub, to be rotationally driven under control.

These types of construction, however, have certain disadvantages in that the fact of having a rotor concentric to the electromagnetic core and an armature which, in addition to moving in axial translation, can also revolve about the axis, requires very accurate machining of the various parts for the purpose of assuring high dimensional accuracy both of the parts and of the relative distances which, for example, in the case of the rotor, have an important influence upon the operation of the magnetic field. Moreover, rotors of this class present the problem in the choice of the materials, in that, whereas the body rotating about the fixed core must be of a soft material sensitive to the magnetic field, typically having a low carbon content, the front crown teeth must be as highly resistant as possible to wear and therefore, for example, must have a high carbon content.

Thus, these types of coupling which are very suitable for high precision applications such as, for example, in the field of automatic machine tools, are not compatible with the need for low-cost couplings of limited size such as occurs, for instance, in the automobile industry, where these types of coupling are at present required, for example, for the governed engagement of the transmission to all four wheels for the purpose of obtaining four driving wheels, whenever this may be required for particular operating conditions.

The technical problem therefore arises of creating a claw coupling or toothed coupling of the electromagnetic type, in which it shall be possible to separate armature and rotor from the electromagnetic fixed core, in this way eliminating the need for linking the rotor with the electromagnetic characteristics and allowing the production of parts constituting the coupling with technology and materials of low sophistication, in this way reducing the production costs.

The coupling must, furthermore, be formed of a small number of parts having minimal inertia, easily assembled and accessible for the standard maintenance operations, whether ordinary or unusual.

Said results are achieved by the present invention, which provides an electromagnetically controlled claw coupling comprising a fixed core, carrying a winding adapted for generating an axially acting magnetic field, a rotor rotationally keyed to a drive shaft and adapted for being coupled with a corresponding coaxial hub, fixed to a driven shaft, in which said rotor is axially movable and is moved in translation for coupling with said hub, by the biasing action exerted by said magnetic field on an armature associated with said fixed core and movable only axially, said armature being made integrally connected with the rotor by rotational and thrust means.

The coupling according to this invention furthermore provides elastic thrust means acting in the opposite direction to the biasing action of the magnetic field, elastic preloading means for the rotor and external devices for the control of the coupling and decoupling operation, which is activated by the biasing action of the magnetic field against the thrust action of elastic means tending to keep the rotor spaced away from the hub, for normally disengaged couplings, and by the biasing action of the magnetic field against the thrust action of elastic means tending to keep the rotor coupled to the hub, for couplings that are normally engaged.

More especially, said elastic thrust means are preferably composed of at least one spring with axial action along the axis of rotation of the rotor, and said rotational and thrust means for the connection between armature and rotor are preferably composed of a bearing which is made integral with the armature and the rotor by means of a support flange.

According to the present invention, it is also provided that said elastic preloading means shall preferably be realized by cup springs disposed between the bearing and the rotor so as to allow a relative translatory movement between these components, adapted for achieving both the take-up of any differences between the coupling travel of the rotor and the travel of the armature into abutment against the electromagnet, and a safety preloading for the case in which, at the instant of coupling, the teeth of the rotor and those of the hub may be facing each other, instead of out of phase.

Further details will become apparent from the following description, with reference to the attached drawings, in which there are shown:

    in Figure 1:    a coupling according to this invention in section on the plane I-I of Fig. 2;

in Figure 2:   the coupling in section on the plane II-II of Fig. 1;

in Figure 3:   a variant of embodiment of the coupling of Fig. 1 in section on the plane III-III of Fig. 4 and

in Figure 4:   the coupling variant in section on the plane IV-IV of Fig. 3.

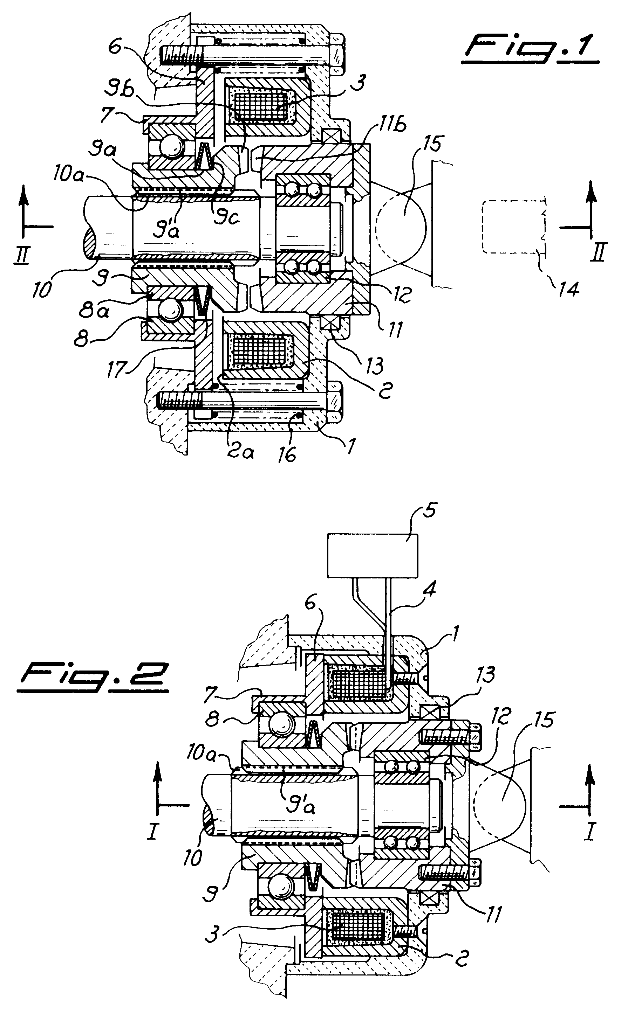

As Figure 1 shows, the electromagnetically operated claw coupling according to this invention is composed basically of a casing 1, to which is firmly attached a fixed core 2 of ferromagnetic material, substantially of horseshoe shape, inside which is disposed a winding 3, connected by leads 4 to a control centre, itself of known type and therefore indicated schematically as a block 5.

In front of the pole ends 2a of the fixed core 2, there is disposed a plate 6, termed the armature, also of ferromagnetic material, to which is firmly attached a flange 7 having a basically L-shaped section.

Said flange 7 firmly supports a bearing 8, of which the inner ring 8a is housed in a seating 9a of a rotor 9, rotationally keyed on a drive shaft 10. Said rotor 9 has a set of radial teeth 9a for coupling with a corresponding set of splines 10a of the drive shaft 10 and a front set of teeth 9b for coupling with a corresponding set of teeth 11b of a hub 11, in turn mounted on a bearing 12 fixed to the drive shaft 10 and on a bearing 13 supported by the casing 1.

In this way, the hub 11 can rotate idling both relative to the drive shaft 10 and relative to the fixed core 2, driving in rotation a driven shaft 14 by means of a cardan joint 15.

The toothed coupling according to this invention is completed by a first spring 16, disposed between the casing 1 and the armature 6 and acting in such a way as to keep said armature 6 spaced away from the fixed core 2, and by a second spring 17, of cup type, disposed in said seating 9a of the rotor between the bearing 8 and a retaining stop 9c.

In at-rest conditions (Fig. 1) the magnet 3 is not energized and, under the action of the axial thrust exerted by the spring 16, the armature 6 is kept spaced away from the fixed core 2, and consequently also the rotor 9, via the bearing 8, is kept retracted from the hub 11, remaining disengaged and therefore not transmitting the movement to said hub and to the driven shaft 14.

When coupling is required, the control centre 5 energizes the electromagnet 3, which pulls up the armature 6, in opposition to the thrust action of the spring 16, until it comes into bearing against the pole ends 2a of the core 2; during its travel, the armature entrains with it in axial translatory motion the bearing 8, and therefore the rotor 9.

By the effect of said translation, the teeth 9b of the rotor 9 engage with the teeth 11b of the hub 11, which by coming into rotation integrally with the rotor, transmits the rotary movement to the driven shaft 14.

When the travel of the armature 6 into bearing against the fixed core 2 must be of a different length from the travel of the rotor 9 towards the hub, for example as a result of the low machining tolerances, or in the case in which the front teeth 9b of the rotor meet corresponding teeth 11b of the hub, instead of grooves, the correct functioning of the coupling is assured by the cup springs 17, which absorb the axial load for the time necessary for the rotor to engage correctly.

If it is then desired to disengage the coupling, it is only necessary to de-energize the winding 3 which, since it no longer exerts a biasing action on the armature 6, leaves the latter free to return to its initial, remote position, under the effect of the thrust action exerted by the spring 16, entraining with it the rotor 9 which, in this manner, disengages from the hub 11 and returns to the initial condition.

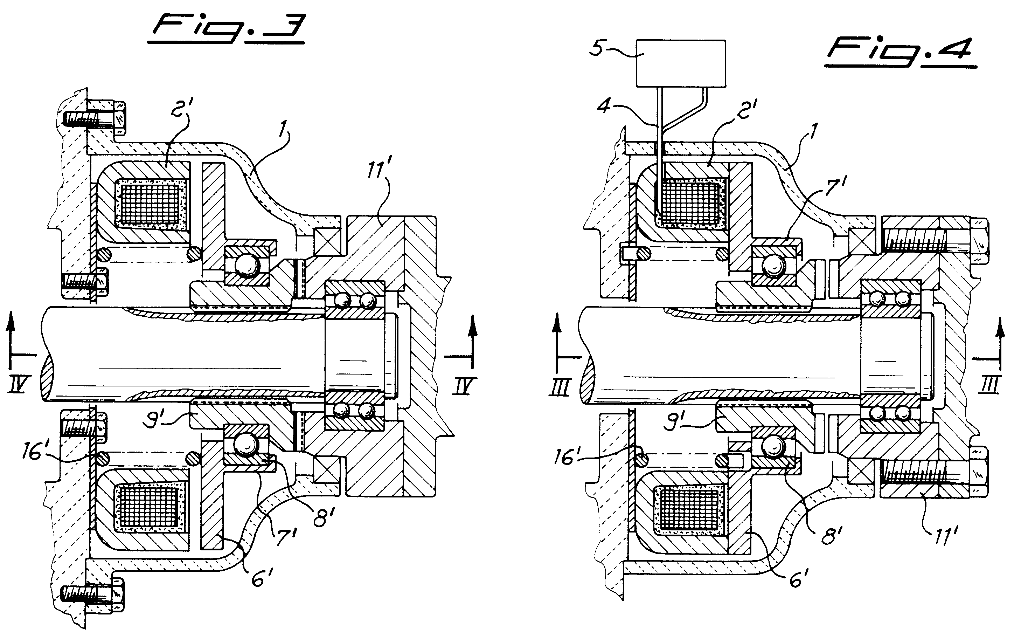

In Figures 3 and 4 there is illustrated an example of embodiment in a variant from that of Figures 1 and 2, and in which corresponding numerical references are retained for functionally equivalent parts.

According to this arrangement, the toothed coupling comprises a rotor 9', normally coupled to the hub 11' under the thrust action of an axially acting spring 16', which tends to push the rotor away from the fixed core 2' and towards the hub 11'.

When coupling disengagement is desired (Fig. 4), the electromagnet 3 is energized, which then generates the magnetic field which pulls the armature 6' towards the fixed core 2', the armature entraining with it, by means of the flange 7' and the bearing 8', the rotor 9', which in this way is moved away from the hub, thus performing decoupling which is maintained as long as the electromagnet is energized.

Cutting-off of the feed to the electromagnet, for example by a control centre, releases the armature from constraint and allows the spring 16' to bring the coupling back to the normal coupled conditions.

As can be seen from the foregoing description, the intrinsic moments of inertia of the coupling are reduced to the minimum, being created solely by the masses which must transmit the torque, composed of the hub alone.

It will, furthermore, be apparent that the coupling can be considered as bilateral, there being no specific constraint which might determine the choice of the drive shaft as compared with the driven shaft.

Numerous variants can be introduced for the technical realization of the constructional details, without thereby departing from the scope of the invention in its general characteristics.

## Claims

1. Electromagnetically controlled claw coupling, comprising a fixed core (2, 2') carrying a winding adapted for generating a magnetic field having an axial action, a rotor (9, 9') keyed in rotation to a drive shaft (10) and adapted to be coupled to a corresponding coaxial hub (11, 11'), integral with a driven shaft (14), characterized by the fact that said rotor (9, 9') is axially movable and is moved in translation for coupling to said hub (11, 11') by the biasing action exerted by said magnetic field on an armature (6, 6') associated with said fixed core (2, 2') and movable only axially, said armature (6, 6') being made integral with the rotor (9, 9') by rotational thrust means, there being also provided elastic thrust means acting in the opposite direction to the biasing action of the magnetic field, elastic preloading means for the rotor and external devices for controlling the coupling operation and decoupling operation.

2. Electromagnetically controlled claw coupling according to Claim 1, characterized by the fact that it is of the normally disengaged type and the biasing action of the magnetic field acts for engagement in opposition to the thrust action of elastic means which tend to keep the rotor spaced away from the hub.

3. Electromagnetically controlled claw coupling according to Claim 1, characterized by the fact that it is of the normally engaged type and the biasing action of the magnetic field acts for disengagement in opposition to the thrust action of elastic means which tend to keep the rotor coupled to the hub.

4. Electromagnetically controlled claw coupling according to Claim 1, characterized by the fact that said elastic thrust means are preferably constituted of at least one spring having an axial action along the axis of rotation of the rotor.

5. Electromagnetically controlled claw coupling according to Claim 1, characterized by the fact that said rotational thrust means for the connection between armature and rotor are preferably constituted of a bearing (8) made integral with the armature (6, 6') and with the rotor (9, 9') by means of a support flange (7, 7').

6. Electromagnetically controlled claw coupling according to Claim 1, characterized by the fact that said elastic preloading means are preferably realized by means of springs of the cup type (17, 17') disposed between the bearing (8) and the rotor (9, 9') in such a manner as to permit a relative translatory movement between them, adapted for performing both the take-up of the possible differences between the coupling travel of the rotor and the travel of the armature into abutment against the electromagnet, and also a safety preloading for the case in which, at the instant of coupling, the teeth of the rotor and those of the hub may be facing one another instead of out of phase.

_Fig.1_

_Fig.2_

Fig.3

Fig.4

EP 0 475 504 A2